# EUROPÄISCHE PATENTANMELDUNG

(11) **EP 0 675 562 A1**
(43) Veröffentlichungstag der Anmeldung: **04.10.1995**
(21) Anmeldenummer: 95101883.7
(22) Anmeldetag: 11.02.1995
(51) Int. Cl.: H01Q 1/24

(54) **Antenne für Mobilfunk-Handgerät mit verminderter Strahlungsbelastung des Nutzers**

(30) Priorität: 30.03.1994 DE 4411583
(71) Anmelder: Deutsche Telekom AG, D-53105 Bonn (DE)
(72) Erfinder: Kühn, Eberhard, Dr.-Ing., D-64846 Gross-Zimmern (DE); Thielen, Herbert, Dipl.-Phys., D-64380 Rossdorf (DE); Dombek, Karl-Peter, Dr.-Ing., D-64397 Modautal (DE); Hollmann, Heinrich, Dipl.-Ing., D-64625 Bensheim (DE); Hombach, Volker, Dr.-Ing., D-64807 Dieburg (DE); Feiss, Wolfgang, Dipl.-Ing., D-64342 Seeheim (DE)

(57) **Zusammenfassung**

Die Antenne, die vorzugsweise bei Mobilfunk-Handgeräten in Mobilfunknetzen eingesetzt wird, soll konstruktiv so ausgebildet sein, daß durch sie insbesondere die Strahlungsbelastung des Nutzers minimiert wird.

Die Antenne basiert auf einer als Monopol ausgebildeten Stabantenne (6), deren elektrische Länge λ/2 beträgt, wobei zusätzlich eine als starres nichtstrahlendes Element ausgebildete Koaxialleitung (4) zwischen der Stabantenne (6) und dem Gehäuse des Mobilfunk-Handgerätes (1) angeordnet ist.

Es wird neben der Minimierung der Strahlungsbelastung des Nutzers auch eine Verbesserung der elektrischen Eigenschaften der Stabantenne (6) bewirkt. Dieser Effekt, der eine höhere Sendeleistung bewirkt, beruht insbesondere auf der nunmehr in geringerem Umfang auftretenden Absorption der abgestrahlten Leistung im Kopf des Nutzers.

## Beschreibung

Die erfindungsgemäße Lösung betrifft eine Antenne für Mobilfunk-Handgeräte mit verminderter Strahlungsbelastung des Nutzers des Mobilfunk-Handgerätes, bei gleichzeitiger Verbesserung der Sende- und Empfangseigenschaften.

Bei den bekannten Mobilfunk-Handgeräten ist die Sende-/Empfangsantenne in der Regel direkt am Gehäuse angebracht. Im Betrieb wird durch den geringen Abstand zwischen dem Kopf des Nutzers und der Antenne nicht nur die Form des Antennendiagramms beeinflußt, sondern auch ein Teil der Sendeleistung als Verlustleistung im Kopf des Nutzers absorbiert. Wie hoch diese Verlustleistung ist, hängt sowohl von der Größe der Sendeleistung, als auch von der Ausführungsform der Antenne und von deren Montageort am Mobilfunk-Handgerät ab.
Nach dem Grundsatz der Immissionsminimierung sollte die Exposition des Nutzers so gering wie möglich gehalten werden.

In der EP 0532960 wird eine Stabantenne beschrieben, bei der der Antennenstab aus einem hohlzylindrischen, in das Gehäuse des Gerätes versenkbaren bzw. umklappbaren, nicht strahlenden Teil (Abstandshalter) und einem im Abstandshalter teleskopartig verschiebbar geführten strahlenden Teil (Strahler) besteht. Der Strahler ist mit einer gewendelten Koaxialleitung als Zuleitung verbunden, die bei herausgezogenem Teleskopstab gestreckt wird. Hierdurch wird der Abstand zwischen dem Kopf des Nutzers und dem strahlenden Antennenteil vergrößert.

Bei dieser Lösung wird im allgemeinen Fall, d. h. bei Verwendung einer Stabantenne von einer Drittel- oder Viertelwellenlänge oder noch kürzer, keine merkliche Verbesserung erzielt, da die Feldstärke am Gehäuse auch bei Verschiebung des Antennenfußpunktes nur unwesentlich abnimmt, und damit die Strahlungsbelastung des Nutzers erhalten bleibt.

Ziel der Erfindung ist es, eine Antennenanordnung zu entwickeln, die den Nutzer weitestgehend vor den Einwirkungen von Funkstrahlen schützt und gute Empfangs- und Sendeeigenschaften aufweist.

Erfindungsgemäß wird als Antenne eine Stabantenne 6 verwendet, die als Monopol mit einer elektrischen Länge von λ/2 der Sendefrequenz, bzw. ein ganzzahliges Vielfaches davon, ausgebildet ist. Nur in diesem Fall wird gewährleistet, daß das Gehäuse des Mobilfunk-Handgerätes feldarm bleibt. Eine zweckmäßige Ausgestaltung der erfindungsgemäßen Lösung basiert auf der Verwendung einer kürzeren Stabantenne 6, deren elektrische Länge mit Hilfe einer Induktivität (Verlängerungsspule) auf die Wellenlänge von λ/2 angeglichen wird. Mittels einer zwischen der Stabantenne 6 und dem Gehäuse des Mobilfunk-Handgerätes 1 angeordneten, starr ausgebildeten Koaxialleitung 4, wird die koaxiale Einspeisung 5 der Stabantenne 6 nach oben verschoben. Die Koaxialleitung 4 stellt somit ein nichtstrahlendes, starr ausgebildetes Antennenunterteil dar, welches den Einspeisepunkt vom Kopf des Nutzers weg verlagert.

Die erfindungsgemäße Lösung wird anhand eines Ausführungsbeispiels näher erläutert.

Fig. 1 zeigt die Vorderansicht eines Mobilfunk-Handgerätes mit der erfindungsgemäßen Antenne.

In Fig. 2 ist ein Beispiel für die Anordnung der koaxialen Einspeisung an der Rückseite eines Mobilfunk-Handgerätes dargestellt.

In Fig. 3 ist eine Ausführung der erfindungsgemäßen Antennenanordnung dargestellt, bei der die starr ausgebildete Koaxialleitung 4 über eine Einführung mit Gelenkverbindung an der Rückseite des Mobilfunk-Handgerätes 3 angeordnet ist.

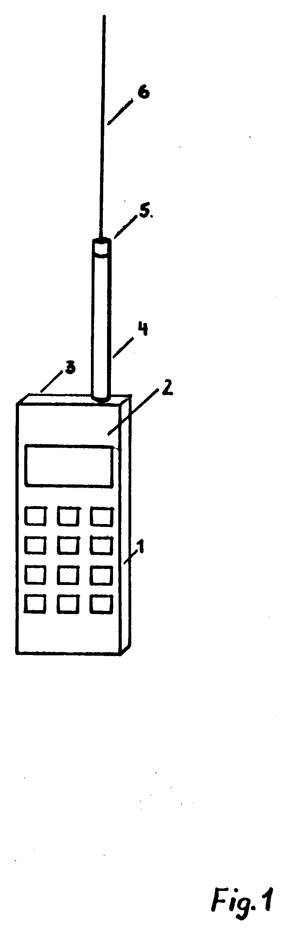

In Figur 1 ist die prinzipielle Lösung mit einer senkrecht aus dem Gehäuse des Mobilfunk-Handgerätes 1 herausgeführten, als Antennenunterteil starr ausgebildeten Koaxialleitung 4, dargestellt. Die starre Koaxialleitung 4 ist dabei über die koaxiale Einspeisung 5 mit der Stabantenne 6 verbunden. Durch die Anordnung der koaxialen Einspeisung 5 außerhalb des Mobilfunk-Handgerätes in Verbindung mit der Bemessung der Stabantenne 6 auf eine Länge von λ/2 wird die Strahlenbelastung des Nutzers minimiert.

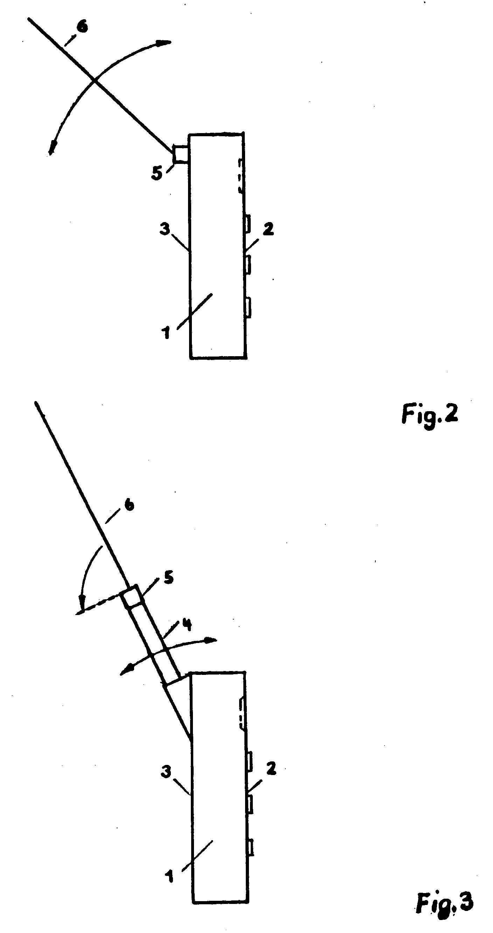

In Figur 2 ist eine Ausführung der Antenne dargestellt, bei der die koaxiale Einspeisung 5 an der Rückseite des Mobilfunk-Handgerätes 3 angeordnet ist. Zwischen koaxialer Einspeisung 5 und Stabantenne 6 ist ein Gelenk angeordnet, welches es gestattet, die Stabantenne 6 in Richtung vom Kopf des Nutzers weg, abzuwinkeln. Durch das Abwinkeln der Stabantenne 6 und damit durch Vergrößerung des Abstands zwischen Stabantenne 6 und Kopf des Nutzers lassen sich bessere elektrische Eigenschaften (geringere Verlustleistungen) der Stabantenne 6 erzielen. Gleichzeitig wird die Strahlenbelastung des Nutzers minimiert.

In Figur 3 ist eine Antenne dargestellt, bei der die starr ausgeführte Koaxialleitung 4 mittels eines mit einer Einführung kombinierten Gelenks an der Rückseite des Mobilfunk-Handgerätes 3 angeordnet ist.
Die Stabantenne 6 ist dabei ebenfalls über ein Gelenk mit der koaxialen Einspeisung 5 verbunden. Bei dieser Ausführungsform ist die Stabantenne 6 teleskopartig ausgebildet, so daß sie sich zusammenschieben läßt. In eingeklapptem Zustand des Gelenks an der Rückseite des Mobilfunk-Handgerätes 3 in den oberen Teil des Gehäuses des Mobilfunk-Handgerätes 1 läßt sich die starr als nichtstrahlendes Antennenunterteil ausgebildete Koaxialleitung 4 in das Gehäuse des Mobilfunk-Handgerätes 1 einschieben.

Mittels der erfindungsgemäßen Antennenanordnung ist es möglich, die Nutzer weitestgehend vor den Einwirkungen von Funkstrahlen zu schützen. Gleichzeitig weist die erfindungsgemäße Antenne gute Empfangs- und Sendeeigenschaften auf.

## Patentansprüche

1. Antenne für Mobilfunk-Handgerät mit verminderter Strahlungsbelastung des Nutzers, bei der zwischen dem Gehäuse des Mobilfunk-Handgerätes und der eigentlichen Antenne eine Koaxialleitung so angeordnet ist, daß der Speisepunkt vom Kopf des Nutzers möglichst weit entfernt ist, **dadurch gekennzeichnet,** daß als Antenne eine als Monopol ausgebildete Stabantenne (6) verwendet wird, deren elektrische Länge λ/2 der Wellenlänge der übertragenen Sendefrequenz beträgt und daß die zwischen Stabantenne (6) und Gehäuse des Mobilfunk-Handgerätes (1) angeordnete Koaxialleitung (4) selbst, als starres, nichtstrahlendes Antennenelement ausgebildet ist, welches vorzugsweise an der vom Nutzer abgewandten Rückseite des Mobilfunk-Handgerätes (3) angeordnet ist.

2. Antenne für Mobilfunk-Handgerät nach Anspruch 1, dadurch gekennzeichnet, daß die Einführung für die starr ausgebildeten Koaxialleitung (4), an der Rückseite des Gehäuses des Mobilfunk-Handgerätes (3) in Kombination mit einem verstellbaren Gelenk angeordnet ist.

3. Antenne für Mobilfunk-Handgerät nach Anspruch 1, dadurch gekennzeichnet, daß zum Abwinkeln der Stabantenne (6) ein verstellbares Gelenk zwischen der Stabantenne (6) und der koaxialen Einspeisung (5) angeordnet ist.

4. Antenne für Mobilfunk-Handgerät nach Anspruch 1, dadurch gekennzeichnet, daß die Stabantenne (6) teleskopartig zusammenschiebbar ist.

5. Antenne für Mobilfunk-Handgerät nach Anspruch 1, dadurch gekennzeichnet, daß die starr ausgebildete Koaxialleitung (4) teleskopartig in das Gehäuse des Handfunkgerätes (1) einschiebbar ist.

6. Antenne für Mobilfunk-Handgerät nach Anspruch 1, dadurch gekennzeichnet, daß sie als Monopol mit einer elektrischen Länge kleiner als λ/2 ausgebildet ist, und daß sie mittels einer induktiven Verlängerungsspule wieder an die Wellenlänge λ/2 angeglichen wird.
